# EUROPEAN PATENT APPLICATION

(11) **EP 3 011 861 A1**
(43) Date of publication of application: **27.04.2016**
(21) Application number: 14189660.5
(22) Date of filing: 21.10.2014
(51) Int. Cl.: A45D 44/00

(54) **Hair consultation tool arrangement and method**

(71) Applicant: The Procter & Gamble Company, Cincinnati, OH 45202 (US)
(72) Inventor: Bonifer, Werner Friedrich Johann, 61476 Kronberg (DE); Franke, Michael, 61476 Kronberg (DE); Langsch, Dieter Hans Josef, 65824 Schwalbach/Taunus (DE); Moser, Eric, 61476 Kronberg (DE); Markobasic, Marika, 65824 Schwalbach/Taunus (DE); von Sartori-Montecroce, Oliver, 13469 Berlin (DE)
(74) Representative: Hirsch, Uwe Thomas M.H.

(57) **Abstract**

The invention relates to a hair consultation tool arrangement comprising a digital video camera adapted for continuously taking pictures at least of the model's head and hair, wherein this tool arrangement may comprise a processing unit having a camera interface for collecting pictures recorded by the digital video camera, a processor with an image processing software tool implemented for processing the collected pictures, a display interface for sending the processed pictures to a display device and a display device for presenting the pictures. The invention further relates to a respective method for rendering a hair consultation. It is suggested to illuminate at least a part of the model to be imaged by the digital video camera system by means of an illumination device directed towards the model's head and hair and comprising at least two lighting modules for applying different types of light onto the model's head and hair. According to an aspect, at least one of said lighting modules can be adapted to illuminate the model with light invisible to human eyes, such as infrared light, wherein said digital video camera system is adapted to be sensitive to said invisible light. According to another aspect, the video camera system and/or the processing unit can be adapted to provide for different sets of pictures of the model representing different illumination situations with different types of lights applied onto the model. A first set of pictures representing a first illumination situation may be processed and/or used to gain certain information on the basis of which processing of a second set of pictures representing a second illumination situation can be effected.

## Description

### FIELD OF THE INVENTION

The invention relates to a hair consultation tool arrangement comprising a digital video camera adapted for continuously taking pictures at least of the model's head and hair, wherein such model can be a human being or an artificial mannequin. Of course, the digital video camera might also take a broader view of the model, such as a portrait containing also the model's head and hair.

This tool arrangement may comprise a processing unit having a camera interface for collecting pictures recorded by the digital video camera, a processor with an image processing software tool implemented for processing the collected pictures, a display interface for sending the processed pictures to a display device and a display device for presenting the pictures. Pictures in the sense of this invention do include both, still pictures and also running pictures (movies) composed of a continuous sequence of recorded pictures. The hair consultation tool arrangement is particularly adapted to a hair color simulation. The invention further relates to a respective method for rendering a hair consultation.

In this text the indefinite article "a/an" shall have the meaning "at least one/one or more", if not specified contrarily.

### BACKGROUND OF THE INVENTION

A method for hair color consultation is known, for instance, from EP 1 147 722 A1, which uses a two-dimensional static digital portrait taken by a camera, in which desired hair style color is input selectively and shown on a display screen. However, such a result looks static and unnatural because the use of one single still picture cannot give a real live impression as if the customer looks into a mirror in which the customer is confronted with his/her new hair color combined with a genuine live facial expression.

US 2004/0239689 A1 is based on the one hand on a dynamic video image (movie) and on the other hand on a change in color of the natural hair of the person. The video image is prepared in real time and reproduced on a mirror-like screen in such a way that it is the impression of the customer to use a mirror, by using one device, onto which both the video camera and the display for presenting the processed pictures are installed. Thus, it is not possible that the user is able to view his/her hair as seen from the side or the rear of the head on the display, similar to a simple single mirror. Another drawback of the presented system is that the image processing is sometimes difficult because it is not easy to decide for the computer system software tool which part of the image is the hair region of the customer, the hair color of which has to be changed in order to present to the customer a realistic virtual image of a future hair coloring.

More particularly, to allow for manipulation of the hair color, but avoiding any manipulation of other portions of the model such as face or neck, precise segmentation of the picture area representing the hair is desired. For such precise segmentation, it is helpful to have an illumination of the model's head with a type of light that is, however, detrimental to brilliant pictures with shiny hairs and soft skin appearance. For example, for identifying the hair region in the picture, it can be helpful to have frontal illumination with a lighting module in front of the model's face emitting bright light directly onto the face what, however, is dazzling and makes the model feel uncomfortable. On the other hand, applying brilliant light onto the model's hair, the light coming from above, from a side and/or from the back, may help in generating shiny, vivid hair appearance, but renders segmentation of the hair area in the picture more difficult.

### SUMMARY OF THE INVENTION

Accordingly, it is an object of the present invention to offer to the customer a more realistic image of the result of the hair coloring by means of continuous pictures (movie) having a better quality with regard to a natural look of the images and a better, simple identification of the mask region of the hair.

Another objective underlying the present invention is to allow for a precise, but still simple segmentation of the model's hair in the pictures to be manipulated without sacrificing a light ambiance making the model feel comfortable and without dazzling the model's eyes.

A still further object underlying the present invention is to allow for a realistic, pleasant visualization of hair coloring in continuous live movie pictures without necessitating excessive data processing capacity.

To address these objectives to at least some extent, it is suggested to give a hair consultation tool arrangement the features of claim 1. Further features are laid down in the dependent claims.

Consequently, it is suggested to illuminate at least a part of the model to be imaged by the digital video camera system by means of an illumination device directed towards the model's head and hair and comprising at least two lighting modules for applying different types of light onto the model's head and hair. According to an aspect, at least one of said lighting modules can be adapted to illuminate the model with light invisible to human eyes, such as infrared light, wherein said digital video camera system is adapted to be sensitive to said invisible light. Use of such invisible light allows for bright, frontal illumination of the model's face without dazzling the model's eyes. Moreover, such invisible light can be adapted to enhance the illumination situation for precise and easy segmentation of the hairs in the picture without having detrimental effects on a pleasant, vivid and shiny appearance of the hairs in the pictures.

According to another aspect, the video camera system and/or the processing unit can be adapted to provide for different sets of pictures of the model representing different illumination situations with different types of lights applied onto the model. A first set of pictures representing a first illumination situation may be processed and/or used to gain certain information on the basis of which processing of a second set of pictures representing a second illumination situation can be effected.

These and other features and advantages become more apparent from the following description giving reference to the drawings and possible examples.

### BRIEF DESCRIPTION OF THE DRAWINGS

- Fig. 1: shows a schematic three-dimensional view of the hair consultation tool arrangement according to an example,

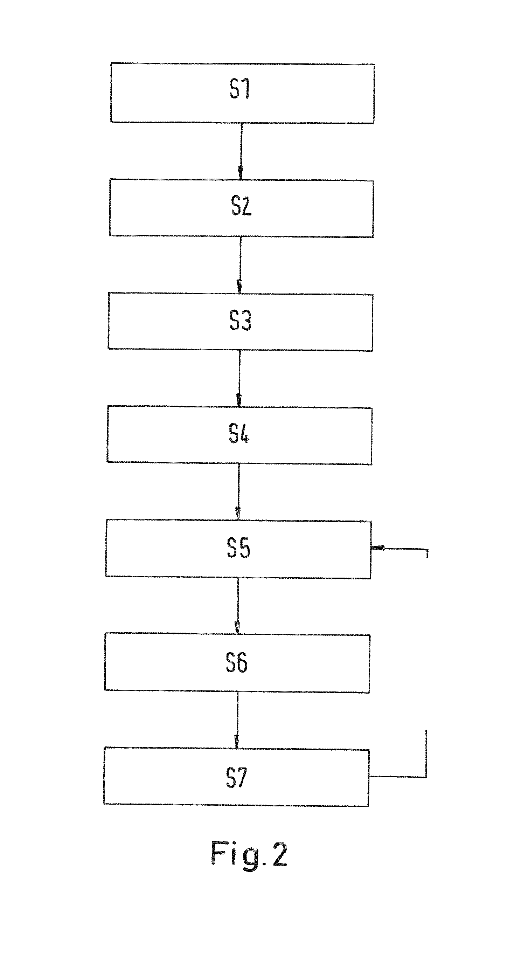

- Fig. 2: shows a schematic sequence of a method for a hair color consultation performed by the hair consultation tool arrangement according to Fig. 1 as a flow chart,
- Fig. 3a and b: show a schematic view of a possible arrangement of the light source of the spotlight module with respect to the digital video camera and the models head and hair in a side view (Fig. 3a) and a top view (Fig. 3b),
- Fig. 4: shows a schematic diagram of a possible arrangement of the light modules, the camera system and a processing unit including a lock-in amplifier for extracting different sets of pictures from the camera signal, said different sets of pictures corresponding to different illumination situations with lights of differently modulated light intensity.

### DETAILED DESCRIPTION OF THE INVENTION

In order to allow for a bright, frontal illumination of a person's face, thereby allowing for easy segmentation of the hair region, but still avoiding dazzling of the model's eyes, the illumination device of the hair consultation tool arrangement may comprise two or more lighting modules for applying different types of light onto the model's head and hair, wherein at least one of said lighting modules may be adapted to illuminate the model with light invisible to human eyes, wherein the digital video camera system for continuously taking pictures of the illuminated model's head and hair is, however, adapted to be sensitive to such invisible light. Use of such invisible light allows for adapting the light emission and illumination situation to the requirements of identification and/or segmentation of the model's hair portion in the picture. For example, the light module emitting such invisible light may be positioned frontal to the model's face so as to apply light substantially directly onto the face and/or into the model's eyes in a direction substantially perpendicular to the front face and/or substantially parallel to the eyes' viewing direction. For example, such invisible light module may be positioned where the camera is positioned or in a region neighboring or adjacent to said camera position.

The invisible light may comprise light of different wave ranges. In particular, infrared light may be used as invisible light. Correspondingly, the aforementioned light module may comprise an infrared light module for applying infrared light onto the model's head and/or hair, wherein in such case the digital video camera system is adapted to be sensitive to such infrared light.

Infrared light may illuminate the model's head and/or hair in a uniform way without being reflected by wet or greasy skin portions or other deflection problems or interferences. Thus, a bright, fully illuminated picture of the model's head and hair may be achieved, such picture allowing for precise and easy segmentation of the model's hair portion without dazzling the model's eyes. Furthermore, since such invisible light, in particular infrared light does not have to be used - but still can be used nevertheless - for the collection of pictures used for displaying the hair manipulation result and/or additional light may be used for creating the pictures representing the hair treatment, hair manipulation and/or visualization of the hair manipulation may be effected without negative effects from the infrared light.

The infrared light module may be adapted to apply near-infrared light of a wavelength between 780 to 3.000 nm, more particular 800 to 1.400 nm, wherein the digital video camera system is adapted to be sensitive to such near-infrared light having the aforementioned wavelength ranges.

In addition to such invisible light, there can be also visible light applied to the model's head and hair. The illumination device may comprise at least a further lighting module which is adapted to illuminate the model with light visible to human eyes, wherein said digital video camera system is adapted to be sensitive to such visible light. Such visible light module may be a spotlight module to illuminate the model's hair with brilliant light having a main emission direction with only small divergence.

According to a further aspect, the hair consultation tool arrangement may use different sets of pictures of the model for different purposes, wherein such different sets of pictures represent different illumination situations with different types of lights applied onto the model. Such strategy allows use of different illumination situations with different types of lights applied onto the model for different purposes and adaption of the respective illumination situation and the respective type of light to the requirements and necessities of the respective purpose.

More particularly, the processing unit may gain information from a first set of pictures representing a first illumination situation, wherein processing of a second set of pictures representing a second illumination situation may be effected on the basis of said information gained from the first set of pictures.

For example, said first set of pictures may be used by the processing unit to select a hair area in said first set of pictures by means of, e.g., segmentation of the hair area on the basis of pixel comparison, color temperature comparison and/or contour comparisons. On the basis of the hair area selected in the first set of pictures, the hair area in the second set of pictures may be identified. For example, the area size, the contour, in particular the circumferential contour or other geometrical features of the hair area identified in the first set of pictures may be used to identify the hair area in the second set of pictures.

Furthermore, the processing unit may be adapted to modify the hair color in the hair area identified in the second set of pictures and present the modified second set of pictures to the display device so as to illustrate the model's portray including the modified hair color to the model on the display device.

Due to use of different sets of pictures for different functional operations of the consultation tool, in particular using a first set of pictures for hair segmentation or identification of the hair region and using a second set of pictures, after having identified the hair area in such second set of pictures making use of the information on the hair area gained from the first set of pictures, for illustrating the hair manipulation allows for adapting the illumination situation for the different sets of pictures to the respective requirements. More particularly, the illumination of the model's head and/or hair for the first set of pictures may be optimized and/or adapted so as to help in segmentation and/or identifying the hair area. On the other hand, the illumination situation for the second set of pictures may be adapted and/or optimized so as to achieve a brilliant, vivid and shiny appearance of the hair.

For example, the first set of pictures may represent an illumination situation with diffuse and/or invisible, in particular infrared light applied onto the model, whereas the second set of pictures may represent a second illumination situation with brilliant light and/or spotlight applied onto the model, wherein such different types of lights may be applied onto the model's head and/or hair from different directions. In other words, the lighting modules applying such different types of light may have different positions relative to the model's head or hair. For example, the diffuse and/or invisible light module may have a position frontal to the model's eyes, whereas the brilliant and/or spotlight modules may be positioned above the model's head to apply light onto the hair from above.

The different sets of pictures represent different illuminations of the model, but show the model basically in identical ways, i.e. substantially identical position, viewing direction, focus point, focal distance and/or other characteristic picture parameters. At least, the sets of pictures correspond to each other in terms of the contours shown in the picutres such as hair contours.

So as to get pictures of the model under such different illumination situations, but still showing the model at substantially the same positions at substantially the same point of times, different ways of creating such different sets of pictures are possible. When continuous pictures or movies of the model's head and hair are to be presented on the display, each set of pictures may include a sufficient number of pictures so as to allow for a movie-like displaying of the pictures. For example, each set of pictures may include 50 pictures per second or any other number of pictures exceeding human eyes' flicker threshold. When using information gained from the first set of pictures, it is helpful to have the respective pictures of the second set of pictures taken at the same time or at least almost the same time as the pictures of the first set of pictures, to avoid differences in the pictures to be compared due to movements of the model's head.

In order to get pictures under different illumination at substantially the same point of time, different approaches are possible. According to a further aspect, the at least two lighting modules may be adapted to apply lights of differently modulated frequencies onto the model, wherein a lock-in amplifier may be used so as to extract pictures corresponding to only one type of applied light or one of the different frequency modulations. More particularly, the processing unit may include a lock-in amplifier adapted to the frequency modulation of at least one of said different types of lights and adapted to extract, from the collected pictures recorded by the digital video camera system, a set of pictures representing the illumination situation with said frequency modulation to which the lock-in amplifier is adapted. The said lock-in amplifier may be a digital lock-in amplifier on the basis of a digital signal processor which may be part of the processor having the image processing software tool for processing the collected pictures.

More particularly, by means of such lock-in amplifier or more than one lock-in amplifier, different sets of pictures corresponding to different illumination situations with the said differently modulated frequencies may be extracted from the signal of the digital video camera system which may collect pictures of the model subject to the different types of lights having differently modulated frequencies at the same time.

Use of such lock-in amplifier allows for use of only one video camera for collecting both sets of pictures representing the different illumination situations since such lock-in amplifier may recognize or extract signals and, thus, pictures corresponding to a specific one of such modulated frequencies from one common video camera signal.

Different sets of pictures corresponding to different illuminations with differently modulated light frequencies can be extracted by such lock-in amplifier from a common video signal.

Such lock-in amplifier is also known as phase-sensitive detector and is a type of amplifier than can extract a signal with a known carrier wave from an extremely noisy environment. More particularly, a lock-in amplifier is essentially a homodyne detector followed by a low-pass filter that is often adjustable in cut-off frequency and filter order. For example, sine and cosine demodulation may be performed simultaneously which is sometimes also referred to as dual phase demodulation.

The aforementioned lock-in amplifier may be implemented as a digital lock-in amplifier having software-based functional components for effecting the necessary signal processing steps for lock-in amplification. If the signals to be processed come in as analogous signals, such signals may be converted into a digital format so the further steps of signal processing may be effected in a digital way.

More particularly, such lock-in amplifier may include an input for the real signal or the measurement signal and an additional input for a reference signal which reference signal has a frequency modulation corresponding to the modulated frequency of the type of light of interest. Such input signal and/or reference signal may be converted into digital format, if necessary. A multiplying component such as a software-based multiplier of the lock-in amplifier may multiply the input signal by the reference signal and may integrate it over a specified time. The resulting signal is usually a DC signal where the contribution from any signal that is not at the same frequency as the reference signal is attenuated close to zero. The out-of-phase component of the signal that has the same frequency as the reference signal is also attenuated, making a lock-in a phase-sensitive detector. As it is known per se, such lock-in amplifier may include a phase-shifting component for shifting the phase of the reference signal and to adapt it to the real signal before it is multiplied in the multiplying component. Furthermore, the lock-in amplifier may include a low-pass filter component and/or an integrating component receiving the multiplied signal and outputting a DC signal as mentioned before.

The aforementioned components may form part of a digital signal processor. Although also an analogous lock-in amplifier may be used, a digital lock-in amplifier allows for use of more than one demodulator per channel, thereby increasing the analysis options.

When applying two or more types of lights of differently modulated frequencies onto the model, two or more lock-in amplifiers may be used, each lock-in amplifier adapted to one of the modulated frequencies of the light applied onto the model so as to extract the signal corresponding to the respective frequency modulation. Such different lock-in amplifiers may be provided in terms of preferably software-based components of a digital lock-in amplifier.

More particularly, the lock-in amplifiers may receive as input signal the signal of the camera collecting pictures of the model subject to the two or more types of lights at the same time or one after the other or in an overlapping manner, i.e. the pulses of the modulated lights may overlap or may not overlap. Processing the video camera signal by means of such lock-in amplifier or more than one lock-in amplifiers allows for providing different sets of pictures corresponding to different illumination with different lights of differently modulated frequencies.

When using such lock-in amplifier, a single video camera may be sufficient, since separating the video signal in different sets of pictures can be effected after collecting the pictures and/or after generating the signal of the video camera.

When the hair consultation tool uses invisible light such as infrared light and additionally, visible light such as spotlight, the invisible light may have a first modulated frequency, whereas the visible light may have a second modulated frequency different to the frequency modulation of the invisible light. The lock-in amplifier may include a first lock-in amplifier component adapted to the frequency modulation of the invisible light and a second lock-in amplifier component adapted to the second frequency modulation of the visible light. Both lock-in amplifier components receive the video signal from the video camera recording pictures of the model subject to both the invisible and the visible lights, wherein the first lock-in amplifier component extracts a first set of pictures corresponding to the invisible light, whereas the second lock-in amplifier component extracts the second set of pictures corresponding to the visible light.

Use of such lock-in amplifier allows for use of only one video camera, since from one and the same video signal different sets of pictures can be extracted by means of such lock-in amplifier.

According to another aspect, however, more than one video camera may be used in the alternative to or in addition to such lock-in amplifier. A first video camera may be adapted to be more sensitive to the type of light emitted from a first one of said two lighting modules than to the type of light emitted from a second one of said two lighting modules. More particularly, said first video camera may be adapted to be more sensitive to invisible, particularly infrared light than to visible light.

A second video camera may be adapted to be more sensitive to the type of light emitted from the second one of said two lighting modules than to the type of light emitted from said first one of said two lighting modules. More particularly, said second video camera may be adapted to be more sensitive to visible light than to invisible light.

Using such first and second video cameras sensitive to different types of light allows to generate different sets of pictures corresponding to different illumination situations without needing complex data processing of the video signal. The different sets of pictures are already generated when collecting the pictures and/or by means of using different cameras.

Making the different video cameras sensitive to different types of lights may be achieved in different ways. For example, the first and second video cameras may be provided with filters for filtering out different wavelength ranges, wherein the first video camera may have a filter adapted to filter out visible light whereas a filter of the second video camera may be adapted to filter out light invisible to human eyes, in particular infrared light. Consequently, the first video camera may provide a set of pictures corresponding to the invisible, particularly infrared light whereas the second video camera may provide a second set of pictures corresponding to the visible light.

In the alternative to or in addition to such filters, the video cameras may be provided with photosensitive elements adapted to be sensitive to different types of lights. In particular, a first video camera may have a photosensitive element adapted to be sensitive to invisible light, particularly infrared light and/or not sensitive to visible light, whereas the second video camera may have a photosensitive element adapted to be sensitive to visible light and/or not sensitive to invisible light such as infrared light.

The aforementioned system having different video cameras adapted to be sensitive to different types of light and/or the aforementioned use of a lock-in amplifier allows for applying the different types of lights onto the model at the same time or simultaneously, since the differently configured video cameras and/or the lock-in amplifiers allow for separation of the respective video signals corresponding to the different types of lights.

In the alternative, or in addition to such simultaneous recording of different sets of pictures, the video camera system also may include a video camera adapted to record pictures representing different illumination situations one after the other and alternating with each other so that pictures representing a first illumination situation with a first type of light applied onto the model may alternate with pictures representing a second illumination situation with a second type of light applied onto said model.

For example, the video camera may be provided with at least one filter for filtering out a specific wavelength range and/or a specific frequency modulation, wherein a filter switcher for switching said at least one filter active and inactive in an alternating manner may be provided.

In the alternative to or in addition to such switchable filter, the illumination device may include a pulse creator to control at least one of the two lighting modules to emit pulsed light, wherein said pulse creator is adapted to control the at least one light module to emit light pulses with a flickering frequency above a human being's optical fusion limit. For example, an infrared sensitive camera may be used to collect pictures corresponding to such pulsed infrared light, whereas another video camera not sensitive to such infrared light may be used to collect pictures corresponding to the additional visible light which may be pulsed or not pulsed.

Aside from enhancing hair identification and picture ambience, use of different light modules and/or types of lights provides for further advantages. A first advantage is to have a light temperature predominantly defined, allowing for image calibration of the used display. In contrast, the current systems contain a white point balance providing a neutral image to the image processing unit. This enhances a more natural and pleasant image on the display device. The second advantage is to be able to control the illumination of the scene: more light on the head, being it the main area of interest, thus producing more shine; less light to the face making the persons appearance more pleasurable; enough diffuse light to avoid shadows on the face that would hinder the segmentation and image processing. This aspect is related to the fact that the hair and head region illuminated by the illumination device is brighter and the natural hair color and structure can be identified more precisely by the image processing software tool because the color temperature of the illumination device is defined and known to the image processing software tool. This allows a calibrated or more precise determination of the natural hair color. As the hair region is better illuminated the hair structure can be evaluated more precisely by the image processing software tool. This leads to a better masking of the hair region and thus to a better identification of the parts of the image to which the change in the color has to be performed. It is also easier for the image processing software to differentiate between color temperature value and brightness value in the image regions. Another aspect is related to the setup and calibration of the tool arrangement during which the exposure time for each picture recorded by the digital video camera, in particular depending on the model's natural hair color, is determined such that the texture of the image or the dynamic range of the light intensities of the camera records in the hair region of the model is in an optimum range for image processing. Due to the additional illumination, the range of possible combinations of aperture and exposure time of the recorded pictures is much broader and can be adjusted optimally. Generally, the brighter the object to be imaged by the video camera is, the shorter the exposure time of each picture can be chosen thus allowing a higher picture rate in the continuous picture sequence (movie) though the frame rate, of course, is not only limited by the exposure time.

In order to achieve high quality images, a HDR camera (High Dynamic Range) might be used. This HDR method is used to capture a higher dynamic range between the lightest and darkest areas of an image than current standard digital imaging methods or cameras. HDR cameras may take multiple pictures e.g. at different exposure times or with different responsivity (different ISO settings as a measure of sensor sensitivity to light) of the light sensor and stitch the different pictures together to produce a resulting image that is representative in both dark and bright areas. The several pictures are taken preferably in a very short sequence to have the utmost identical scene in all the pictures used for the HDR method. This is done by picture processing to imitate one HDR picture using more than one picture to be stitched, in particular two pictures. Each of the multiple pictures represents an optimum gradation of a selection from the total range of brightness of the scene, whereas each pictures chooses a different selection from the total range of brightness. Thus, optimum gradation can be simulated in the resulting picture for a higher range of brightness with respect to a single picture.

Alternatively some digital cameras can obtain a HDR image from a single image captured. A HDR image will preferably be recorded as at least a 12 bit image (image with 12 bit per channel). This might be achieved by different active areas used on the camera sensor for one picture point. The active areas might be built by different sensor pixels collecting the light for one picture point. For example, simultaneously two or more sensor pixels can be used to capture the light for one picture point. The processor of the camera then decides, how many of these sensor pixels are used for the one picture point, depending of the amount of light, i.e. the brightness, corresponding to that one picture point.

According to another aspect, the illumination device may comprise a diffuse light module creating a diffuse light and the other of the at least two lighting modules being a spotlight module creating a spotlight. The spotlight module might in particular be a point light module having at least one point light source. Accordingly, the illumination of the model is preferably made of a mixture of diffuse light and spotlight. The diffuse light enhances the image segregation of certain image areas, i.e. the separation of the hair region being the region of interest according to the invention and other image areas, such as face or background. The spot (or specula) light is in particular used to provide a natural shine to the hair and to enhance a natural color to the skin. Accordingly, these two different lighting modules (diffuse and spot light module) according to the invention improve the image quality of the processed pictures. The spotlight module may emit visible light, whereas the diffuse light module may emit invisible light such as infrared light and/or additional visible light.

At least one light source of the diffuse light module may be positioned basically in the same plane with the video camera, said plane being directed basically perpendicular to the optical axis of the video camera. Further, it is advantageous that the diffuse light module might comprise at least two light sources, preferably three light sources and most preferably four light sources arranged around the digital video camera. According to a preferred arrangement of the light sources, all light sources of the diffuse light module can be arranged in the same plane, and in particular in the same plane with the digital video camera. Thus, the created diffuse light is directed towards the model in the same or a similar direction as the view direction of the digital camera thereby reducing disturbing shadows on the model's surface, i.e. the face and the hair of the model. A positive effect of the diffuse lighting is that the texture in the interesting image areas of the model is very good due to a light intensity in these regions being in a mid-range far away from the dark region (black) and a bright region (white) both showing no surface texture. In the mid-region of light intensity, the creative possibilities for the image processing software tool are optimal, e.g. for identifying and masking certain objects or regions in the pictures. Thus, the diffuse light module having one or preferably more than one light source enhances the identification of the hair region, the color of which is selectively to be changed by the hair consultation tool arrangement system while the other regions such as face and background shall remain unchanged in order to avoid not desired artifacts in the processed pictures. This leads to notably better quality of the processed pictures much closer to the natural look of a customer with the virtual hair color.

The light sources used in the diffuse light module might have an elongated form, such as tubular fluorescent tubes. The elongated form generates a distributed light emission along the elongation of the light sources abetting a diffuse light generation. Additionally, the light sources might be covered by a diffuser, such as a translucent glass, in order to produce a high quality diffuse light with an almost equally distributed light intensity on the object of interest, i.e. the model's head and hair. In addition or in the alternative to such elongated, tube-like light sources, the diffuse light module may include at least one flood light unit and/or a panel-like light emitter for emitting diffuse light from a lighting panel. Such flood light or panel-like lighting element may include, e.g., a plurality of LEDs in a matrix-like arrangement or other light sources for emitting diffuse light from a lighting plane.

In order to improve the plasticity of the processed picture, a spotlight module can be provided for creating a spotlight on the model and in particular on the model's head and hair. The light source might be adjustable to emit the spotlight cone in an angle between 0° and 90° with respect to the optical axis of the digital camera. This means that the light source of the spotlight is disposed in the space between the camera and the model with a certain distance to the optical axis such that the light source itself is not seen in the image. The light cone of the spotlight source is directed towards the model. If the optical axis of the camera and the middle axis of the light cone (light axis) are brought to an intersection (e.g. because they intersect each other in real or as they are shifted theoretically in parallel to intersect each other), the smaller angle between these axis is between 0° to 90°. This is meant by the before identified feature.

According to a more detailed definition of the relative disposal of the spotlight and the digital camera according to a preferred embodiment, it is provided that the light source is adjustable to emit the spot light cone with its light axis positioned in a azimuthal angle β between 0° and 90° measured between a horizontal plane running through the model's head and hair and/or through the focal point of the digital camera and the light axis (i.e. the middle axis of the light cone) leading from said spotlight source (light source of said spotlight module) to said model's head and hair. The digital camera might be disposed with its optical axis disposed in the horizontal plane or in an azimuthal angle γ with respect to the horizontal plane wherein γ ≤ β. The azimuthal angles β, γ shall be measured starting from the horizontal plane in the same direction which leads towards the space defined vertically above the horizontal plane.

The angle γ is preferably chosen to be between 10° to 15°. The makes the model generally look more attractive.

Expressed less technically, the light source of the spot light module is disposed in the space between the camera and the model or - with respect to the model - behind the camera then having preferably a very reduced opening angle and directed towards the model. This is a situation of no backlighting. A preferred azimuthal angle β is between 30° and 70°, and in particular between 35° and 65°.

Further, a polar angle α defined between the vertical plane including said optical axis and a vertical plane including said light axis is in a range between -45° to + 45°. This means that the spotlight illuminates the model's head and hair from the front above the model's head and hair (preferred azimuthal angle β) and possibly in a certain angle in horizontal projection of said optical axis and said light axis. If the polar angle α is in a range between +15° to + 45° or -15° to -45°, the light source of the spotlight is not positioned in the vertical plane including the optical axis, i.e. not vertically above the camera. This might increase the plasticity of the picture taken.

The spotlight can be lighting up the model's head and hair from the top (or more precisely top side) with respect to the optical axis of the video camera thus bringing a light brilliance to the hair region of the model being of most interest and enhancing the plasticity of the face by introducing some shadows in the mid brightness range to the model's face. In particular, in combination with the diffuse light module, it is avoided that the shadows produced by the spotlight are too strong and have a negative influence on the optical reception of the picture by the customer and the image processing ability. To this aim it might be advantageous that the area transcribed by the spot light described as the sum of the range (defined as a positive value) of the polar angles (α) and of the range (defined as a positive value) of the azimuthal angles (β), in which in particular more than 50% of the light intensity are emitted, is less than 10° to 20°. This ensures that the spotlight is limited in the range of the major intensity to the model's hair. This leads to a high plasticity of the hair in the pictures taken.

In this context, a backlighting of the model can be avoided. Backlighting is defined as illumination of a light source located in space opposite to the digital video camera relative to the model. To this aim, the light source of the spotlight module might be attached to a hinged bracket which is fixed to a module carrying the digital camera (camera support) avoiding thus a positioning of the spotlight in a way to create a backlighting situation. In addition, the processing unit might be adapted - by respective software installed on the processor - to recognize a backlighting situation in the collected pictures by means of the image processing software tool and to send a warning message to the display interface for being displayed on the display device. This is a user friendly support helping to optimize the setup and calibration of the illumination module.

Besides the recognition of a backlighting situation, the processing unit might also be adapted to recognize by means of the image processing software tool in the recorded (and collected) pictures other effects not desired, such as a unpleasant shadow direction or a too low or high intensity of the spotlight, and might inform the user accordingly. Thus, a user is able to arrange the spotlight in a better (optimum) position to achieve the best quality available in the processed pictures.

Further, the one, more or all light sources might be controllable by the processing unit, i.e. the processing unit might be adapted to switch on and off and/or to calibrate the light sources. Calibration might include control of the light intensity and/or the light temperature of the light sources, depending on the possibilities of adjustment of the different light sources used.

According to a further aspect, the hair consultation tool offers the possibility of more different views of the customer's head and hair, and in particular also a rear view. To this aim, the display device may preferably be a portable display device connected to the display interface of the processing unit. Preferably, the display device of the processing interface is using a wireless communication, such as WLAN, Bluetooth or the like, for establishing data communication between the processing unit and the display device via the display interface. Of course, the processing unit might also be included into the portable display device. In such an embodiment the connection to the display interface of the processing unit is a connection using an internal display interface.

The use of the portable display device and preferably also of the wireless communication between an in particular external processing unit and the display device, allows free movement of the model (customer) before the video camera, e.g. a rotation of up to 360° (full rotation), while taking the display device with him or her such that the module views the processed pictures in each rotational position with respect to the video camera. Accordingly, the portable display is moved together with the model whiles displaying continuously the views of the model as seen by the fixed digital video camera. Thus, the mobile display rotated together with the model in front of this face creates in combination with the fixed digital video camera a virtual mirror allowing the model customer to see also the back of the head normally not accessible by a simple single mirror.

Furthermore, the display device may comprise a display processor adapted - e.g. by a suited software installed on the display processor - to execute an application on the display device that is showing the processed image and allowing a user input or setup the system and/or to influence the processed image using input tools. The processor might also include the image processing software tool, in particular in case the processing unit and the display unit build one single integrated unit.

Such display device may include a touch-screen display device, such as a tablet computer, allowing the installation of such applications easily. The input tools might be panels, buttons or the like presented on the display and selectable via the touch-screen.

According to another aspect, the touch-screen display device might allow as a user input (besides other input options) in particular a finger painting on the image of a picture taken by the camera and displayed on the touch-screen for selecting hair, skin and (if applicable) background areas in the image (in particular of the still picture). This is supporting the step of segmenting the hair in the displayed image.

The finger painting can be displayed on the touch screen such that areas selected by finger painting, i.e. by touching with and preferably also moving the finger on the touch screen in a zone of the touch screen where the image of the picture is displayed, are shown (highlighted) as a defined color layered over the original image. The colors might be predefined as different colors for the selection of hair and skin and/or other areas respectively. In case that also background areas can be or are selected, the color of the area selected by finger painting might be the same color as used for the skin area or a color different from the colors of the highlighted hair and the skin areas. There might also be a separate user input, e.g. a button on the touch screen or other, for indicating that the finger painting performed after actuation of the separate user input will be a selection of a hair or skin (or background, if applicable) area.

If an area already is selected by finger painting and highlighted on the display with the respective color, it might be useful to deselect an area or parts of an area by simply touching selected areas again. Of course, there also might be a separate user input, e.g. a button on the touch screen or other, for indicating that the finger printing performed after actuation of the separate user input will be a deselection of previously selected areas.

Instead of a finger painting, also a normal pointer or mouse device might be used. This processing is easy and intuitive for selecting the hair area by simply discriminating between hair, skin and background. In a preferred embodiment, the background, i.e. in particular all no-hair-and no-face- or no-skin-areas, are recognized automatically by the image processing software tool. This might be based on the selection of the hair and face areas such that the no-hair- and the no-face areas are supposed to be background areas. In this embodiment there is no need for a manually marking the background in the still picture.

The applications installed on the display device equipped with a display processor might also be used to initialize the hair consultation process including a calibration of the hair consultation tool arrangement (performed e.g. by the processing unit) and/or to control the hair consultation process. To this aim, the display device is sending respective commands to the processing unit via the display interface. The display device according to this preferred embodiment is accordingly acting as an input and control panel of the processing unit.

Of course, a processing unit can also be directly controlled by an input device connected to the processing unit, such as a key pad. Also a voice-controlled processing is possible, either directly or via a tablet unit providing e.g. also a combination of a voice and key pad control. Further, a monitor might be connected directly to the processing unit to allow an optical control of the input and the system. The processing unit might be a conventional desktop computer. The supervisor controlling the processing device with the keypad and the monitor might accordingly be a hair stylist or consultant. The same functionality, however, can be offered in an administrator mode of the application running on the display device. It is also possible that two display devices are connected in parallel to the processing unit, being a costumer display device in the customer mode and a stylist display device in the administrator mode, the latter allowing e.g. a more detailed input of parameters for the hair consultation.

However, it is a major benefit of the proposed arrangement that it can be controlled simply by a customer display device only acting as input and control panel of the processing unit. This enhances the acceptance of the hair consultation tool arrangement in practice as the customer has the feeling to change the hair color on his or her own.

In order to ease the handling of the hair consultation tool arrangement, it might be provided that the digital video camera and the illumination device are integrated into a camera support thereby defining an integrated arrangement of the illumination module and the video camera. In particular, the position of the light sources of the diffuse illumination module and the camera are fixed in an optimum way.

Further, a mirror and/or a display holder might be integrated into the camera support. Thus, if a portable display device is held in the display holder, the camera support might be used as a conventional-like virtual mirror. This gives the opportunity that the customer might survey the effects of the color change while the hair stylist is styling the customers hair. Further, the display holder might be equipped with a charging unit to recharge the accumulator of the display device such that the display device is energized efficiently if taken out of the holder to have the benefit of the portable display holder and enabling a virtual 360° mirror.

The hair consultation tool arrangement may also include a revolving chair or plateau - i.e. rotational devices - disposed in the focus of the video camera such that the model's head and hair are imaged in the pictures recorded by the video camera, the revolving chair or plateau allowing a free rotation of the model's head up to 360°, i.e. completely, and/or in certain degree steps, e.g. 45°, 60°, 90°, and so on to the left or the right while remaining disposed in focus of the video camera. By use of the revolving chair, a defined rotation of the model in front of the camera can be achieved. Accordingly, the revolving chair is defined as a device allowing preferably the model's head to turn around an axis running preferably through the head, and in particular through the center of the head. Thus, the model, and in particular the model's head and hair, will stay in focus of the digital video camera during the free rotation. Alternatively, the rotational device might also be a plateau onto which the model is standing. Alternatively, the model might turn around him/herself, while remaining disposed in the focus of said digital video camera.

In order to enhance the segmentation of the hair area with respect to the background, a defined background element might be disposed behind the model in view of the video camera, the background element having in particular one defined color (mono-colored background). A suited background is a blue or green background which is often used in the image processing technology to ease masking of a model in front of said background. Another option is to take a picture of the environment, e.g. a room or the background, before the customers appears. The content of this picture can be recognized as background (as long as it remains unchanged) while the customer is situated in the foreground.

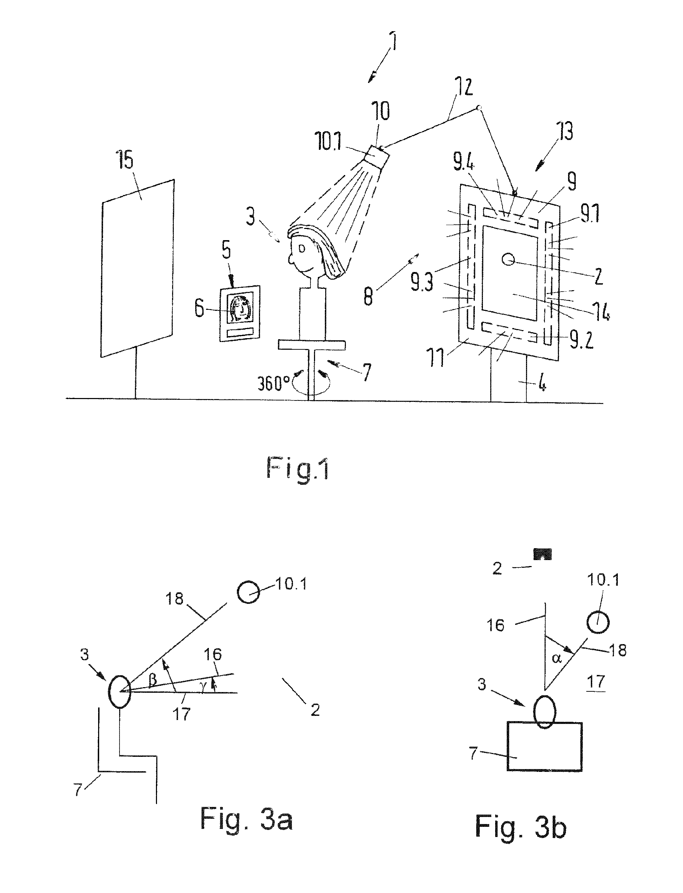

Now referring to the drawings, in Fig. 1 a hair consultation tool arrangement 1 for use in a hair salon, beauty parlor, retail shop or even at home is shown comprising a digital video camera 2 adapted for continuously taking pictures of a model's head and hair 3. In the drawn example, the model 3 is an artificial mannequin. However, instead of an artificial mannequin, a living human being can be positioned of course as model 3 in front of the digital video camera 2 for taking pictures of the human being's head and hair. The hair consultation tool arrangement 1 comprises further a processing unit 4 having a camera interface for collecting pictures recorded by the digital video camera 2. In Fig. 1, the processing unit 4 is shown as a schematic box.

In the processing unit 4, a processor (not shown) is provided with an image processing software tool implemented for processing the pictures recorded by the video camera 2 and collected by the processing unit 4 via the camera interface. The processing unit 4 further has a display interface for sending the processed pictures 6 to a display device 5. The display device 5 is provided for presenting the processed pictures 6 to the customer and/or user being for example the model 3.

In the embodiment according to Fig. 1, the display device 5 is a portable display device 5 connected to the display interface of the processing unit 4 by means of a wireless communication such as WLAN, Bluetooth, or the like. Using this wireless communication, a data communication between the processing unit 4 and the display device 5 is implemented allowing for sending the processed pictures 6 from the processing unit 4 to the display device 5 and for transmitting user commands input into the portable display device 5 to the processing unit 4.

The model 3 is disposed on a revolving chair 7 (including a revolving plateau for disposing an artificial mannequin) allowing a up to 360° rotation of the revolving chair 7 such that the model's head and hair 3 are imaged in the pictures recorded by the video camera 2 in each rotational position of the revolving chair 7. Thus, a up to 360° image sequence of the model 3 can be processed.

As evident from Fig. 1, it is advantageous that the display device 5 is a portable display device 5, such as a tablet computer, which might be hold by a human being model 3 during rotation on the revolving chair 7. Thus, the model 3 can view his image recorded by the digital video camera 2 in real time as processed picture 6 on the display device 5 while rotating with the revolving chair 7.

Accordingly, the present invention creates a virtual mirror allowing - in contrast to a real mirror attached to the wall - also to display rear views of the head and hair of the model 3 in real time.

In order to create high quality real time pictures, the hair consultation tool arrangement 1 comprises further an illumination device 8 directed towards the model's head and hair 3 for illuminating the part of interest of the model 3 recorded by the digital video camera 2. The illumination device 8 comprises two different lighting modules 9 and 10, wherein the lighting module 9 is an infrared, particularly diffuse light module and the lighting module 10 is a spotlight module.

The infrared light module 9 creates invisible, infrared, particularly diffuse light and comprises in the example shown four light sources 9.1 to 9.4 built as elongated tubular tubes. The light sources 9.1 to 9.4 of the invisible light module 9 might be positioned in the same plane with the video camera 2 said plane being directed approximately perpendicular to the optical axis of the video camera according to a preferred embodiment. Preferably, the video camera 2 is positioned somewhere between all light sources 9.1 to 9.4 arranged to surround the digital video camera 2. This enhances the equal light intensity distribution of the light emitted by the diffuse light module 9 with respect to the view direction of the digital video camera 2 and the model 3. In addition to invisible infrared light, the light module 9 may also emit visible, preferably diffuse light to give the skin a soft appearance in the second set of pictures.

The light sources might be direct light sources facing the model 3 directly (as shown in Fig. 1) or indirect light sources facing the model 3 indirectly using a reflecting surface such a foil, a mirror, a screen or the like (as not shown in the drawings).

In order to enhance the scattering of the light emitted by the light sources 9.1 to 9.4 of the light module 9, the light sources 9.1 to 9.4 might be covered by a diffuser 11 such as a translucent glass plate in front of the light sources 9.1 to 9.4.

In addition or in the alternative, the light sources may include flood lights or panel-like light emitting elements.

As already explained, the infrared and/or diffuse light allows an optimum image segregation as the texture in the recorded images is high allowing the image processing software tool to precisely differentiate between different areas in the pictures.

However, as pictures recorded with a diffuse front light, i.e. light directed in the same direction as the optical axis of the digital video camera 2, are often considered as being dead or boring due to a missing plasticity in the picture, another light source 10.1 of the spotlight module 10 is provided and disposed to light up the model's hair 3 with a spotlight. The light source can be adjustable to emit the spotlight in an angle between 0° and 90° with respect to the optical axis of the digital camera in any rotational position around the optical axis of the camera. To this aim, the spotlight module 10 might be fixed by a hinged bracket 12 to a camera support 13 including the digital video camera 2, the diffuse light module 9 with the diffusor 11, the spotlight module 10 with the hinged bracket 12, the processing unit 4 and a mirror 14 positioned somewhere within a frame defined by diffuse light sources 9.1 to 9.4 surrounding also the digital video camera 2. The mirror 14 might be a traditional glass mirror having a hole for the digital video camera 2, a semi-transparent mirror allowing the video camera 2 to record pictures through the semi-transparent mirror or a digital mirror, the latter being a display unit such as a computer screen, a TV screen or a movable tablet computer showing in real time the pictures recorded by the digital video camera 2.

With respect to Figs. 3a and 3b, a preferred arrangement of the light source 10.1 of the spotlight module 10 is described with respect to the camera 2 and the model's 3 head and hair being the desired focal point. Fig. 3a shows a side view of the camera 2 and the model 3 seated on the revolving chair 7. The optical axis 16 is displayed between the camera 2 and the head of model 3.

The horizontal plane 17 running through the model's 3 head and hear, and in particular running also through the desired focal point, is disposed perpendicular to the paper plane. The camera 2 is disposed (in the azimuthal direction) between the horizontal plane 17 and the light source 10.1 of the spotlight module 10.

Fig. 3b is a view from the top to this horizontal plane 17, in which the polar angle α is defined (starting from the optical axis 16 or the vertical projection of the optical axis 16 into the horizontal plane 17).

The light axis 18 is defined as the middle axis of the light cone of the spotlight source 10.1 leading form the spotlight source 10.1 to the head of the model 3 and intersecting the optical axis 16 in the head of the model 3 (being the focal point of the camera 2). The azimuthal angle β is defined as the angle between the light axis 18 and the horizontal plane 17. Counting of said angle β starts in the horizontal plane 17 towards the space above the horizontal plane 17. This azimuthal angle β is preferably in the range between 30° to 70°.

According to the position of the camera 2, the optical axis 16 of the camera 2 includes an azimuthal angle γ with the horizontal plane 17. This azimuthal angle γ is preferably in the range between 10° to 15°.

Fig, 3b shows the horizontal plane 17 from a top view. The light source 10.1, the light axis 18, the optical axis 16 of the camera 2, and the camera 2 lie out of this horizontal plane 17. The polar angle α is defined in this horizontal plane 17 as the angle between the vertical projection of the optical axis 16 and the vertical projection of the light axis 18 into the horizontal plane 17. In other words, the polar angle α is defined as the angle between a vertical plane including said optical axis 16 and a vertical plane including said light axis 18. Counting of said angle α starts at the optical axis 16, or their projection into the horizontal plane 17. The polar angle α is preferably in the range between -45° to +45°.

It is to be understood that the camera support 13 as described before is a preferred embodiment of the current invention. However, the different parts of the camera support 13 (video camera 2, diffuse light module 9, spotlight module 10, mirror 14, processing unit 4, etc.) can be separate parts arranged in a suitable manner to allow the before described functionality.

The light sources 9.1 to 9.4 and 10.1 might be controlled by the processing unit 4, i.e. for example be switched off and on and calibrated by means of the processing unit 4. Preferably, the light source 10.1 of the spotlight module 10 is cold white lamp (approximately 4000K). Furthermore, the light sources 9.1 to 9.4 of the infrared light module 9 may be infrared lamps emitting near-infrared light of a wavelength between about 800 to 1.400 nm. If the light module 9 additionally includes visible light sources, such light sources can be cold white lamps similar to light source 10.1, wherein, however, such visible light emitted from light module 9 is preferably diffuse light.

In the view direction of the digital camera 2, a mono-colored background 15 is optionally being disposed behind the model 3. The background color might be in particular blue or green for distinguishing the model 3 clearly from the background 15 and enhancing thus a creative power of the image processing software tool.

In the following, the process of hair consultation is described on basis of the preferred example of a hair color simulation. This process is mainly performed by the processor of the processing unit 4 in which suited software tools are implemented to perform the following steps. For a necessary user input, e.g. the display device 5 might be used. According to a preferred embodiment, the display device 5 is a portable display device, such as a tablet computer, with an application implemented on the display processor allowing user interaction and input in communication with the processing unit 4.

After switching on the system components of the hair consultation tool arrangement 1, in particular the digital video camera 2, the illumination device 8 the processing unit 4 and the display device 5, in a first step S1, the setup and calibration of the illumination device 8 and the video camera 2 are performed. Preferably, the model 3 is already positioned on the revolving chair 7 while performing the calibration steps. After change of the model 3, a respective calibration process might be performed again initiated e.g. by a respective user input on the portable display device 5.

During the calibration of the illumination source, the lighting is tested by the image processing software tool in order to ensure satisfactory hair segmentation, while the overall image is rendered real-like. To this aim, the image processing software tool might give a feedback to the illumination device 8 regarding the adjustment of intensity, color temperature and so on, to adjust the controllable light sources 9.1 to 9.4 and 10.1 of the different lighting modules 9, 10 until an optimum result of the recorded picture is obtained as defined by the image processing software tool. The processing software might as well adjust the camera settings to calibrate the image, for example the brightness. Preferably the white point of the camera is set and the exposure time is adjusted. Further, modification of the aperture of the camera is possible.

For setting the white point, the color calibration can be done directly through adjusting thru the display device 5 held in front of camera display a standard white or grey color. The advantage is that the color calibration of the camera 2 includes the color calibration of the display device 5

Afterwards or in parallel, the exposure time of the video camera 2 is determined depending on the model's hair color for ensuring real-like rendering of the hair and a sufficient texture for the virtual color treatment of the hair to be performed in the further steps.

The following step S2 is a calibration of a still picture taken of the model 3. In this step, first a still picture is taken and calibrated by the image processing software tool in order to render a real-like image by selectively altering e.g. brightness of some areas of the face, e.g. the skin. For example, darkening of the skin leads often to a natural appearance of the picture. Further auto-adjusting tools can be applied to the recorded picture by the image processing software tool. The determined parameters for an optimum processed picture are stored and apply in the following to the continuously recorded pictures for creating a real time movie image. For example it is possible to decrease the brightness of the whole image after colorization of the hair area. The idea is to dispose of a brighter image for colorization obtaining more information within the hair area.

After calibrating the still picture, the still picture is displayed on the display device 5 for initiating the next process step S3 directed to the segmentation of the hair area. This step is preferably performed in interaction with the user being able to identify, e.g. by a manual selection using finger painting on a touch-screen display device 5, the hair areas from other areas of the image, such as skin and background. This might be performed by easily highlighting selectively the hair areas as well as the background areas by a finger painting on the still image displayed on the touch-screen and sending the information back to the processing unit 4. This is an easy and intuitive process for selecting the hair area allowing a simple discrimination between hair, skin and background.

This step S3 might be left out if the system automatically recognizes any kind of hair and skin. Therefore the system is equipped with a library. This library might be "intelligent", learning from the performed cases.

In the next process step S4, the image processing software tool is selecting the complete hair area in the at least one still picture and correlates this hair area with a specific color pattern. The color pattern is e.g. the rgb color space. The correlation might be performed by assigning certain color pattern values to the pixels being identified as pixels of the hair region.

For selecting the hair area, also tracking features of the face might be used as generally known in the image processing technology. Further masks might be used for spotting eyes, mouth, teeth and/or other parts of the face or background.

The segmentation of the entire hair area might be performed by creating a hair mask confined versus the other image areas. This hair mask is basically based on identifying the natural hair color pattern values and allowing a certain range of these color pattern values to select pixels showing hair in the image to be processed.

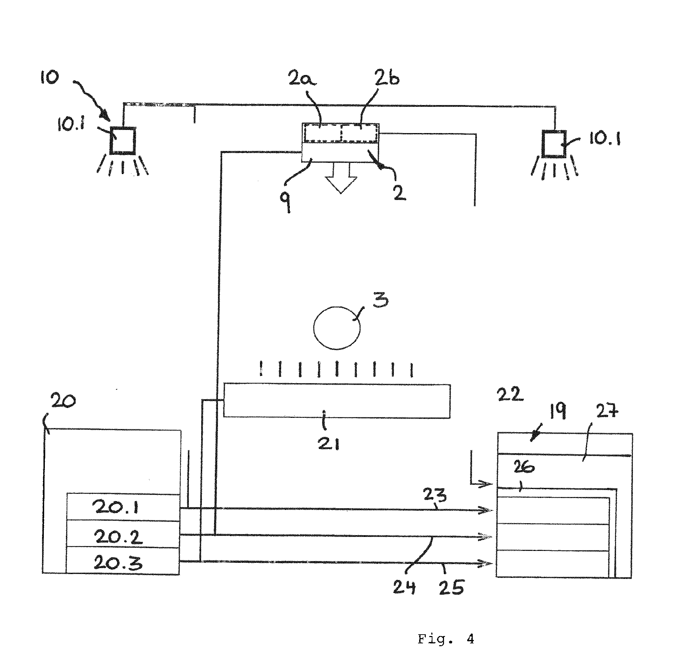

For identifying and/or segmenting the hair area in step S3 and/or in step S4, the consultation tool preferably provides for a first set of pictures showing the model's head and hair under illumination of the infrared light module 9. The generation of such pictures representing a specific illumination situation may involve use of a lock-in amplifier 19, as it is shown in Fig. 4. More particularly, such lock-in amplifier 19 may be used to extract different sets of pictures from the signal of the digital video camera 2, wherein a first set of pictures shows the model's head and hair subject to infrared light illumination by infrared light module 9 and a second set of pictures shows the model's head and hair subject to spotlight illumination by spotlight module 10.

To allow for effective use of such lock-in amplifier 19, the light module 9 and the light module 10 are controlled by processing unit 4 in terms of their light frequency and/or light intensity. The processing unit 4 may include a frequency modulator 20 which controls the light modules 9 and 10 to emit light at differently modulated frequencies. For example, infrared light module 9 can be controlled to emit infrared light with a modulated frequency 20.1, wherease frequency modulator 20 applies a differently modulated frequency 20.2 to spotlight module 10. If a backlight module 21 is provided, the frequency modulator 20 may apply a further differently modulated frequency 20.3 to such additional light module 21. In other words, the frequency modulations 20.1, 20.2 and 20.3 for the infrared module 9, the spotlight module 10 and the additional light module 21 are different from each other, for example in terms of pulse length and/or pulse shape (such as triangular pulses, rectangular pulses or sinusoidal pulses) and/or pulse pattern (for example long-long-short versus long-short-long versus short-short-short-long).

As can be seen from Fig. 4, the lock-in amplifier 19 receives as input signals, on the one hand, the video camera signal 22 and, on the other hand, reference signals 23, 24 and 25 corresponding to the frequency modulation of the frequency modulator 20.

A phase shifting component 26 of lock-in amplifier 19 may be used for shifting the phase of the reference signals 23, 24 and/or 25 so as to adapt it to the real signal 22 of the video camera. Furthermore, lock-in amplifier 19 may include a multiplying component 27 for multiplying the video camera signal 22 with a respective one of reference signals 23, 24 and 25, wherein it also may integrate it over a specified time. The resulting signal of such multiplication is a DC signal where the contribution from any signal that is not at the same frequency as the reference signal used for the multiplication is attenuated close to zero.

Consequently, when using reference signal 23 corresponding to the frequency modulation 20.1 for the spotlights 10 for the data processing, the lock-in amplifier 19 provides for a video signal corresponding to pictures illustrating the model's head and hair subject to spotlight by spotlight module 10. On the other hand, when using reference signal 24 corresponding to the frequency modulation of the infrared module 9, the lock-in amplifier 19 may provide for a video signal and thus, a set of pictures illustrating the model's head and hair under infrared illumination by the infrared light module 9. Further, when using the reference signal 25 corresponding to the modulated frequency of the additional light module 21, the lock-in amplifier 19 may extract a set of pictures from the video camera signal 22, which set of pictures shows the model as illuminated by the additional light module 21.

In addition to or in the alternative to use of such lock-in amplifier 19, the hair consultation tool arrangement 1 also may use more than one video camera 2, in particular video cameras 2a and 2b positioned very close to each other as indicated in Fig. 4 by dashed lines, wherein one of such video cameras 2a may be adapted to be more sensitive to infrared light than to the visible spotlight whereas another one of said plurality of video cameras 2b may be adapted to be more sensitive to visible light than to infrared light. Such different sensitivity may be achieved by means of filters associated with the respective cameras and/or differently sensitive photosensors. Consequently, when using such plurality of digital video cameras 2a and 2b differently sensitive to different light, the system may provide for different sets of pictures corresponding to different illumination situations. A first set of pictures shows the model illuminated by infrared light, whereas a second set of pictures shows the model 3 illuminated by visible spotlight from spotlight module 10. These sets of pictures may correspond to each other in terms of viewing axis and shown image, wherein correspondence may be given in terms of being congruent to each other pixel by pixel.

Another way of providing such different sets of pictures corresponding to different illumination situations would be to use a video camera having a switchable filter, for example a filter that can be switched so as to filter out infrared light in a first switching configuration and/or filtering out visible light in a second switching configuration. Consequently, when alternating the switching configuration of such filter system, the video camera 2 provides pictures showing the model illuminated by infrared light and pictures showing the model illuminated by visible spotlight in an alternating manner.

The pictures showing the model 3 as illuminated by infrared light by the infrared light module 9 may be used for the segmentation of the hair area, whereas the pictures showing the model 3 as illuminated by the spotlight from the spotlight module 10 may be used for showing the model on display device 5, be it in terms of the real picture showing the real hair color or be it in terms of the modified picture showing the modified hair color. So as to identify the hair area in the second set of pictures corresponding to the spotlight illumination and/or allow for segmentation of the hair area in the spotlight pictures, the information derived from the infrared pictures is used. In particular, the size, the contour and/or position of certain points of the detected area in the entire picture of the first set of pictures may be used so as to identify the hair area in the second set of pictures.

In the process step S5, the entire hair area is segmented in each processed picture of the continuously collected pictures showing the model under spotlight based on the segmentation and information derived from the infrared pictures.

In the next step S6, a hair color selected by the user is applied to the virtual hair mask. In case, the user has not yet determined the wished for hair color, the user might be prompted on the display device 5 to select a certain color out of a color pattern displayed on the image device 5. The application of the selected hair color to the virtual hair is performed by the image processing software tool in the processing unit 4. The colorization of the hair piece might be performed by "warping" the histogram of the original hair to the histogram of a selected hair image. The hair is then layered over the original image.

The image resulting from S6 is then processed to be ready for displaying. This can include modification of brightness and gamma value and/or color correction with regard to the used display. It is also possible to just adopt the resolution of the image to the resolution of the display device.

After having processed the picture, the processed picture is sent to the display device 5 for presenting an image of the model 3 with the virtual hair mask in the desired color (step S7).

After sending the processed image 6 to the display device 5, the processor of the processing unit 4 returns to step S5 and starts defining a new hair piece for the next picture to be processed.

The process continues until the user stops or switches off the hair consultation tool arrangement. This allows the model 3 to rotate the head while receiving a real time image of the view with the hair color changed to the hair color chosen by the user.

Of course, it is possible to store a still image or a movie composed of continuously stored processed images in order to share the processed images via a telecommunication network e.g. with a social network or to transmit the pictures by e-mail to the user. Pictures may also be stored in a data base to document the consultation and application process.

With the proposed hair consultation tool arrangement a powerful tool has been established to simulate the change of the hair color of a costumer before the stylist colors the consumer and/or user's hair in real.

When the desired hair color has been selected, the tool according to the present invention can be used, optionally in conjunction with separate measurements of the models hair, with a system capable of creating the target hair color product to obtain the desired hair color, and optionally producing the target hair color product.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

### List of Reference Numerals

- 1: hair consultation tool arrangement
- 2: digital video camera
- 3: model
- 4: processing unit
- 5: display device
- 6: processed picture
- 7: revolving chair or plateau
- 8: illumination device
- 9: lighting module, diffuse light module
- 9.x: light source of the diffuse light module
- 10: lighting module, spotlight module
- 10.1: light source of the spotlight module
- 11: diffusor
- 12: hinged bracket
- 13: camera support
- 14: mirror
- 15: mono-colored background
- 16: optical axis between camera and model's hair and head
- 17: horizontal plane including the optical axis
- 18: light axis between spotlight module and model's hair and head
- 19: lock-in amplifier
- 20: frequency modulator
- 21: backlight module
- 22: video camera signal
- 23: reference signal
- 24: reference signal
- 25: reference signal
- 26: phase shifter
- 27: multiplier

- α: polar angle between vertical projections of the optical axis and the light axis
- β: azimuthal angle between horizontal plane and light axis
- γ: azimuthal angle between horizontal plane and optical axis

- S1: calibration of illumination and camera
- S2: calibration of still picture
- S3: segmentation of hair area
- S4: correlating selected hair area with specific color pattern
- S5: creation of virtual hair mask for each processed picture
- S6: application of selected hair color to the virtual hair mask
- S7: presenting processed image

## Claims

1. Hair consultation tool arrangement comprising a digital video camera system (2) adapted for continuously taking pictures of a model's head and hair (3), a processing unit (4) having a camera interface for collecting pictures recorded by said digital video camera system (2), a processor with an image processing software tool implemented for processing the collected pictures and a display interface for sending the processed pictures (6) to a display device (5), and a display device (5) for presenting the processed pictures (6), said hair consultation tool arrangement (1) further comprising an illumination device (8) directed towards the model's head and hair (3) for illuminating the part of the model (3) imaged by the digital video camera system (2), said illumination device (8) comprising at least two lighting modules (9, 10) for applying different types of light onto the model's head and hair (3), **characterized in that** at least one of said lighting modules (9) is adapted to illuminate the model (3) with light invisible to human eyes, wherein said digital video camera system (2) is adapted to be sensitive to said invisible light.

2. Hair consultation tool arrangement according to the preceding claim, wherein said at least one of said lighting modules (9) is adapted to
- illuminate the model with infrared light, wherein said digital video camera system (2) is adapted to be sensitive to such infrared light, and/or
- illuminate the model with near-infrared light of a wavelength between 780 to 3000 nm, particularly 800 to 1400 nm, wherein said digital video camera system (2) is adapted to be sensitive to such near-infrared light having a wavelength of 780 to 3000 nm, in particular 800 to 1400 nm, and/or
- apply diffuse, invisible light onto the model.

3. Hair consultation tool arrangement according to anyone of the preceding claims, wherein at least a further one of said lighting modules (10) is
- adapted to illuminate the model with light visible to human eyes, wherein said digital video camera system (2) is adapted to be sensitive to such visible light, and/or
- a spotlight module adapted to light up the model (3) with a spotlight.

4. Hair consultation tool arrangement according to the preamble of claim 1 or any of the preceding claims, wherein said digital video camera system (2) is adapted to record different sets of pictures of said model representing different illumination situations with different types of lights applied onto said model, and wherein said processing unit (4) is adapted to gain information from a first set of pictures representing a first illumination situation and to process a second set of pictures representing a second illumination situation on the basis of said information gained from the first set of pictures.

5. Hair consulation tool arrangement according to the preceding claim, wherein said processing unit (4) is adapted to
- select a hair area in said first set of pictures, said first set of pictures in particular representing a first illumination situation with diffuse and/or invisible light applied onto the model,
- identify the hair area in the second set of pictures on the basis of the hair area selected in the first set of pictures, second set of pictures in particular representing an illumination situation with visible spotlight applied onto said model,
- modify the hair color in the hair area identified in the second set of pictures, and
- present the modified second set of pictures to the display device (5).

6. Hair consultation tool arrangement according to the preamble of claim 1 or anyone of the preceding claims, wherein said at least two lighting modules (9, 10) are adapted to apply lights of differently modulated frequencies onto the model, wherein said processing unit (4) includes a lock-in amplifier adapted to the frequency modulation of at least one of said different types of lights and adapted to extract, from the collected pictures recorded by said digital video camera system (2), a/the first set of pictures representing the illumination situation with said frequency modulation.

7. Hair consultation tool arrangement according to the preceding claim, wherein said at least two lighting modules (9, 10) are adapted to apply invisible, particularly infrared light having a first modulated frequency and, at the same time, visible light, particularly spotlight having a second modulated frequency different from said first modulated frequency onto the model, wherein said video camera system (2) is adapted to collect pictures representing an illumination situation corresponding to multiple lights with differently modulated frequencies applied simultaneously onto said model, wherein said lock-in amplifier is adapted to extract, from the collected pictures recorded by said digital video camera system (2), a/the first set of pictures representing an illumination situation with light having the first modulated frequency only and a/the second set of pictures representing the illumination situation with light having the second modulated frequency only.

8. Hair consultation tool arrangement according to anyone of the two preceding claims, wherein said lock-in amplifier includes at least one of the following components, particularly in terms of software-based components of a digital signal processing unit:
- an input for a camera signal (22) from the digital video camera system 2,
- an input for a reference signal (23, 24, 25) from a frequency modulator (20),
- a multiplying component (27) for multiplying the camera signal (22) by the reference signal (23, 24, 25),
- an integrating component for integrating the multiplied signal over a specified time,
- a phase-shifting component (26) for shifting the phase of the reference signal (23, 24, 25) and/or adapting the phase of the reference signal (23, 24, 25) to the phase of the camera signal (22).

9. Hair consultation tool arrangement according to one of the preceding claims, wherein the digital video camera system (2) includes
- a first video camera (2a) adapted to be
o more sensitive to the type of light emitted from a first one of said two lighting modules (9) than to the type of light emitted from a second one of said two lighting modules (10), and/or
o more sensitive to invisible, particularly infrared, light than to visible light; and
- a second video camera (2b) adapted to be
o more sensitive to the type of light emitted from said second one of said two lighting modules (10) than to the type of light emitted from said first one of said two lighting modules (9), and/or
o more sensitive to visible light than to invisible light, wherein said first and second video cameras (2a, 2b) are adapted to provide for pictures congruent to each other and/or corresponding to each other pixel by pixel.

10. Hair consultation tool arrangement according to the preceding claim, wherein said first and second video cameras (2a, 2b) are provided with
- filters for filtering out different wavelength ranges, wherein a filter associated with said first video camera (2a) is adapted to filter out visible light and/or a filter associated with said second video camera (2b) is adapted to filter out light invisible to human eyes, in particular infrared light, and/or
- photosensitive elements, wherein the photosensitive element of said first video camera (2a) is adapted to be sensitive to invisible light, particularly infrared light, and the photosensitive element of said second video camera (2b) is adapted to be sensitive to visible light.

11. Hair consultation tool arrangement according to any of the preceding claims, wherein said video camera system (2) includes a video camera (2c) adapted to record pictures representing different illumination situations one after the other and alternating with each other so that pictures representing a first illumination situation with a first type of light applied onto said model alternate with pictures representing a second illumination situation with a second type of light applied onto said model.

12. Hair consultation tool arrangement according to the preceding claim, wherein said video camera (2c) is provided with at least one filter for filtering out a specific wavelength range and a filter switcher for switching said at least one filter active and inactice in an alternating manner.

13. Hair consultation tool arrangement according to any of the preceding claims, wherein said illumination device (8) includes a pulse creator to control at least one of said two lighting modules (9, 10) to emit pulsed light, wherein said pulse creator is adapted to control said at least one light module (9, 10) to emit light pulses with a flickering frequency above a human being's optical fusion limit.

14. Method for rendering a hair consultation, particularly with use of the hair consultation tool arrangement of any of claims 1 - 13, said method comprising the steps of:
- continuously taking pictures of a model's head and hair (3), wherein, for taking such pictures, different types of light are applied onto the model's head and hair (3),
- processing said pictures,
- displaying the processed pictures (6) on a display device (5),
**characterized by** at least one of the following steps
- illuminating the model (3) with light invisible to human eyes and taking at least some of said pictures with a digital video camera system (2) sensitive to said invisible light and/or illuminationg the model (3) with lights of differently modulated frequencies,
- recording different sets of pictures of said model representing different illumination situations with different types of lights applied onto said model,
- gaining information from a first set of pictures representing a first illumination situation and processing a second set of pictures representing a second illumination situation on the basis of said information gained from the first set of pictures.

15. Method according to the preceeding claim, wherein the following steps are taken:
- selecting a hair area in said first set of pictures,
- identifying the hair area in the second set of pictures on the basis of the hair area selected in the first set of pictures,
- modifying the hair color in the hair area identified in the second set of pictures, and
- presenting the modified second set of pictures on the display device (5).
